# EUROPEAN PATENT SPECIFICATION

(11) **EP 3 087 267 B1**
(45) Date of publication and mention of the grant of the patent: **24.08.2022**
(21) Application number: 14885127.2
(22) Date of filing: 18.12.2014
(51) Int. Cl.: F02C 7/36, F02C 3/107, F02K 3/06

(54) **GEARED TURBOFAN WITH A GEARBOX AFT OF A FAN DRIVE TURBINE**
GETRIEBEFAN MIT MIT GETRIEBE HINTER EINER FANANTRIEBSTURBINE
TURBOSOUFFLANTE À RÉDUCTEUR COMPRENANT UNE BOÎTE DE VITESSE À L'ARRIÈRE D'UNE TURBINE D'ENTRAÎNEMENT DE SOUFFLANTE

(30) Priority: 23.12.2013 US 201361920157 P; 24.01.2014 US 201414162810
(43) Date of publication of application: 02.11.2016
(73) Proprietor: Raytheon Technologies Corporation, Farmington, CT 06032 (US)
(72) Inventor: SCHWARZ, Frederick M., Glastonbury, Connecticut 06033 (US); SUCIU, Gabriel L., Glastonbury, Connecticut 06033 (US)
(74) Representative: Dehns
(86) International application number: PCT/US2014/071037
(87) International publication number: WO 2015/138030

(56) References cited:
- EP-A2- 2 071 153
- EP-A2- 2 199 568
- US-A- 4 251 987
- US-A- 4 827 712
- US-A- 4 916 894
- US-A- 4 916 894
- US-A1- 2008 098 717
- US-A1- 2010 154 384
- US-A1- 2010 192 595
- US-A1- 2013 223 992

## Description

### BACKGROUND

A gas turbine engine may include a fan section, a compressor section, a combustor section, and a turbine section. Air entering the compressor section is typically compressed and delivered into the combustor section where it is mixed with fuel and ignited to generate a high-speed exhaust gas flow. The high-speed exhaust gas flow typically expands through the turbine section to drive the compressor and the fan section. Among other variations, the compressor section can include low and high pressure compressors, and the turbine section can include low and high pressure turbines.

Typically, a high pressure turbine drives a high pressure compressor through an outer shaft to form a high spool, and a low pressure turbine drives a low pressure compressor through an inner shaft to form a low spool. The fan section may also be driven by the inner shaft. A direct drive gas turbine engine may include a fan section driven by the low spool such that a low pressure compressor, low pressure turbine, and fan section rotate at a common speed in a common direction.

A speed reduction device, which may be a fan drive gear system or other mechanism, may be utilized to drive the fan section such that the fan section rotates at a different speed than the turbine section. This allows for an overall increase in propulsive efficiency of the engine. In such engine architectures, a shaft driven by one of the turbine sections provides an input to the speed reduction device that drives the fan section at a reduced speed such that both the turbine section and the fan section can rotate at closer to optimal speeds.

### MAIN REQUEST

Although gas turbine engines utilizing speed change mechanisms are generally known to be capable of improved propulsive efficiency relative to conventional engines, gas turbine engine manufacturers continue to seek further improvements to engine performance including improvements to thermal, transfer and propulsive efficiencies.

EP 2 199 568 A2 discloses a prior art geared differential speed counter-rotatable low pressure turbine.

EP 2 071 153 A2 discloses a prior art gas turbine engine with a counter-rotating fan.

US 2013/0223992 A1 discloses a prior art counter-rotating low pressure turbine with gear system mounted to turbine exhaust case.

US 4,916,894 A discloses a prior art high bypass turbofan engine having a partially geared fan drive turbine.

US 2010/0192595 A1 discloses a prior art gas turbine engine according to the preamble of claim 1, and a prior art method according to the preamble of claim 10.

### SUMMARY

According to a first aspect of the present invention, there is provided a gas turbine engine as set forth in claim 1.

A further embodiment of any of the foregoing embodiments includes a connector attaching an output of the epicyclic gearbox to an inner shaft.

In a further embodiment of any of the foregoing embodiments, the output of the epicyclic gearbox is a ring gear.

In a further embodiment of any of the foregoing embodiments, the output of the epicyclic gearbox is a planetary carrier.

In a further embodiment of any of the foregoing embodiments, the inner shaft extends through the sun gear.

In a further embodiment of any of the foregoing embodiments, the speed change mechanism is a planetary gear system.

In a further embodiment of any of the foregoing embodiments, the speed change mechanism is a star gear system.

### MAIN REQUEST

In a further embodiment of any of the foregoing embodiments, the fan section and a low pressure compressor are attached to an inner shaft.

A further embodiment of any of the foregoing embodiments includes a first compressor immediately aft of the fan section and immediately upstream of the combustor section.

A further embodiment of any of the foregoing embodiments includes a high pressure turbine and an intermediate turbine.

In a further embodiment of any of the foregoing embodiments, the high pressure turbine is axially upstream of the intermediate turbine.

A further embodiment of any of the foregoing embodiments includes a low pressure compressor and a high pressure compressor, wherein the low pressure compressor is connected with the intermediate turbine and the high pressure compressor is connected with the high pressure turbine.

In a further embodiment of any of the foregoing embodiments, the gas turbine engine is a three spool gas turbine engine.

According to a further aspect of the present invention, there is provided a method as set forth in claim 10.

A further embodiment of any of the foregoing embodiments includes rotating a compressor at the second rotational speed output.

A further embodiment of any of the foregoing embodiments includes rotating only the fan at the second rotational speed.

In a further embodiment of any of the foregoing embodiments, the gas turbine engine is a three spool gas turbine engine.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic view of a gas turbine engine according to an example embodiment.
Figure 2 illustrates a schematic view of a gas turbine engine according to another example embodiment.
Figure 3 illustrates a schematic view of a gas turbine according to yet another example embodiment.

### DETAILED DESCRIPTION

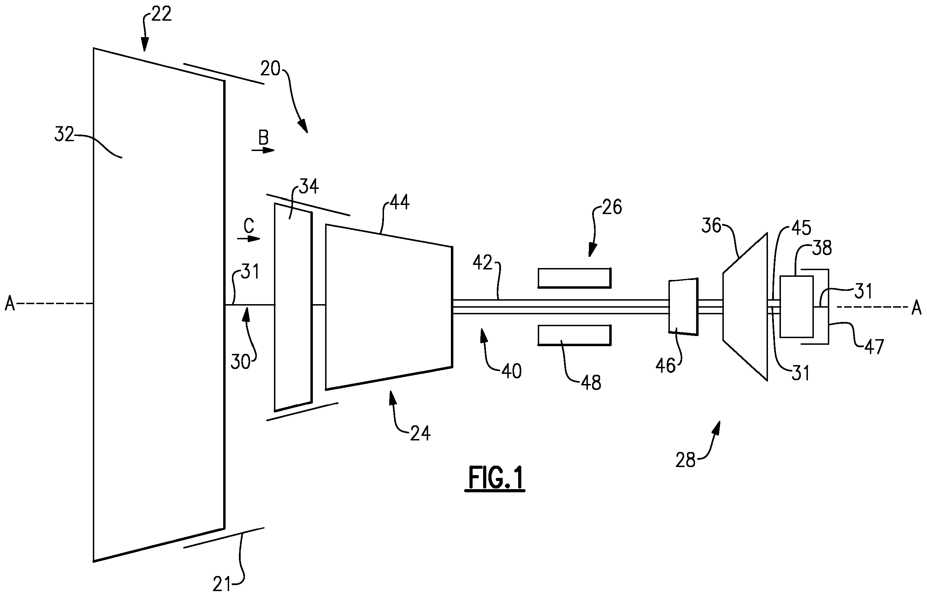

Figure 1 schematically illustrates a gas turbine engine 20. The gas turbine engine 20 generally incorporates a fan section 22, a compressor section 24, a combustor section 26, and a turbine section 28. The fan section 22 drives air along a bypass flow path B in a bypass duct defined within a nacelle or housing 21, while the compressor section 24 drives air along a core flow path C for compression and communication into the combustor section 26 then expansion through the turbine section 28.

The exemplary engine 20 generally includes a low speed spool 30 and a high speed spool 40 mounted for rotation about an engine central longitudinal axis A. The low speed spool 30 generally includes an inner shaft 31. The inner shaft 31 interconnects a fan 32, a first (or low) pressure compressor 34 with a first (or low) pressure turbine 36 through a speed change mechanism, which in the exemplary gas turbine engine 20 is illustrated as a geared architecture 38. The first pressure turbine 36 in this example is a fixed stator turbine and drives the fan 32 as well as the first pressure compressor 34 through the geared architecture 38 in this example.

A high speed spool 40 includes an outer shaft 42 that interconnects a second (or high) pressure compressor 44 and a second (or high) pressure turbine 46. A combustor 48 is arranged in the exemplary gas turbine engine 20 axially between the high pressure compressor 44 and the high pressure turbine 46. The inner shaft 31 and the outer shaft 42 are concentric and rotate about the engine central longitudinal axis A which is collinear with their longitudinal axes.

In one example, the geared architecture 38 is located aft of the low pressure turbine 36. The low pressure turbine 36 is attached to a sun gear of the geared architecture 38 through a turbine drive shaft 45. A ring gear connector 47 attaches a ring gear of the geared architecture 38 to the inner shaft 31. The inner shaft 31 extends through the sun gear of the geared architecture 38 to drive the fan 32 and the low pressure compressor 34 at the same speed.

The low pressure turbine 36 rotates the turbine drive shaft 45 at a first rotational speed to rotate the geared architecture 38. The geared architecture 38 reduces the first rotational speed from the turbine drive shaft 45 to a second rotational speed for rotating the inner drive shaft 31. The fan 32 and the low pressure compressor 34 both rotate at the second rotational speed. The high pressure compressor 44 and the high pressure turbine 46 rotate at a third rotational speed different from the first and second rotational speed.

The core airflow C is compressed by the low pressure compressor 34 and the high pressure compressor 44, mixed and burned with fuel in the combustor 48 then expanded over the high pressure turbine 46 and the low pressure turbine 36. The turbines 46 and 36 rotationally drive the respective high speed spool 40 and low speed spool 30 in response to the expansion.

The engine 20 in one example is a high-bypass geared aircraft engine. In a further example, the engine 20 bypass ratio is greater than about six, with an example embodiment being greater than about ten, the geared architecture 38 is an epicyclic gear train such as a planetary gear system, a star gear system, or other gear system. The gear reduction ratio of greater than about 2.3 at the low pressure turbine 36. A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K × 9/5). The "Low corrected fan tip speed" as disclosed herein according to one non-limiting embodiment is less than about 1150 ft / second (350.5 m/s).

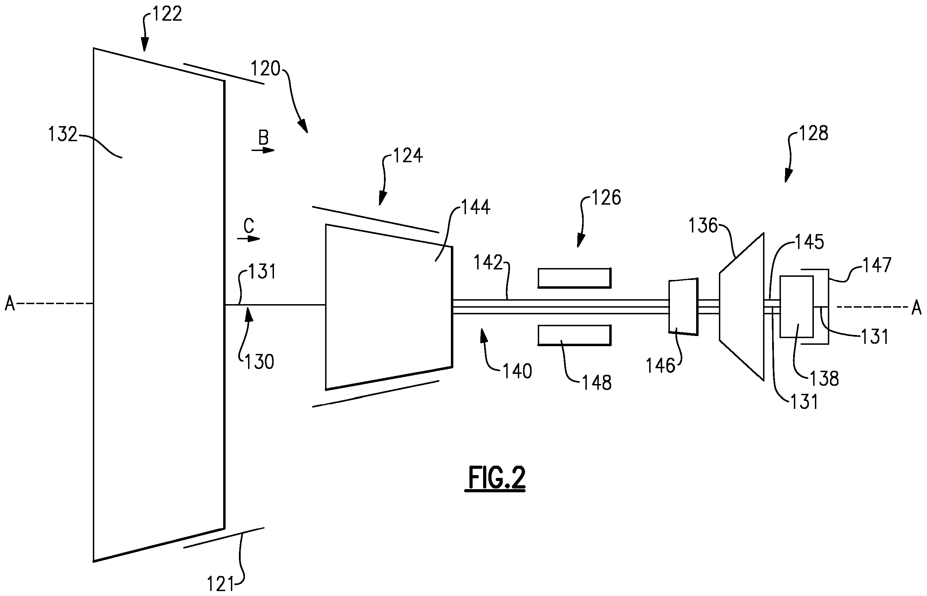

Figure 2 illustrates another example gas turbine engine 120. The gas turbine engine 120 is substantially similar to the gas turbine engine 20 of Figure 1 except where shown in Figure 2 or discussed below. The example gas turbine engine 120 is disclosed herein as a two spool turbofan that generally incorporates a fan section 122, a compressor section 124, a combustor section 126, and a turbine section 128.

The exemplary gas turbine engine 120 generally includes a low speed spool 130 and a high speed spool 140 mounted for rotation about an engine central longitudinal axis A. The low speed spool 130 generally includes an inner shaft 131. The inner shaft interconnects a fan 132 and a low pressure turbine 136 through a speed change mechanism 138, such as an epicyclic gearbox. The low pressure turbine 36 in this example is a fixed stator turbine and drives the fan 132 directly through the geared architecture 138 in this example. The high speed spool 140 includes an outer shaft 142 that interconnects a high pressure compressor 144 and a high pressure turbine 146. A combustor 148 is arranged in the exemplary gas turbine engine 120 between the high pressure compressor 144 and the high pressure turbine 146. The inner shaft 131 and the outer shaft 142 are concentric and rotate about the engine central longitudinal axis A which is collinear with their longitudinal axes.

In one example, the geared architecture 138 is located aft of the low pressure turbine 136. The low pressure turbine 136 is attached to a sun gear of the geared architecture 138 through a turbine drive shaft 145. A ring gear connector 147 attaches a ring gear of the geared architecture 38 to the inner shaft 131. The inner shaft 131 extends through the sun gear of the geared architecture 138 to drive the fan 132.

The low pressure turbine 136 rotates the drive turbine shaft 45 at a first rotational speed to rotate the geared architecture 138. The geared architecture 138 reduces the first rotational speed from the turbine drive shaft 145 to a second rotational speed to rotate the inner drive shaft 131. The fan 132 rotates at the second rotational speed. The high pressure compressor 144 and the high pressure turbine 146 rotate at a third rotational speed different from the first and second rotational speed.

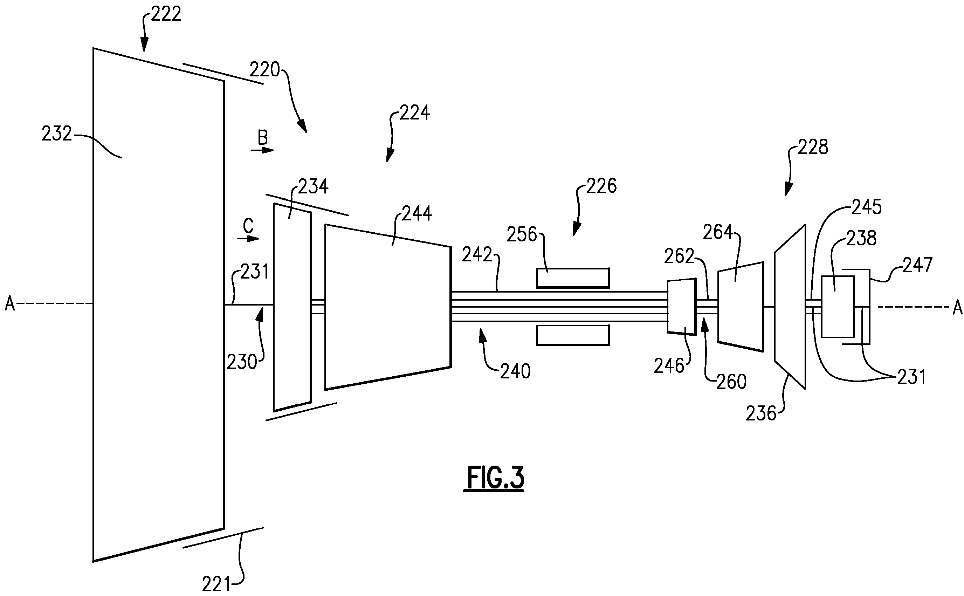

Figure 3 illustrates yet another example gas turbine engine 220. The gas turbine engine 220 is generally the same as the gas turbine engine shown in Figure 1 except where shown in Figure 3 or discussed below. The gas turbine engine 220 is disclosed herein as a three spool turbofan that generally incorporates a fan section 222, a compressor section 224, a combustor section 226, and a turbine section 228.

The exemplary gas turbine engine 220 generally includes a low speed spool 230, an intermediate spool 260, and a high speed spool 240 mounted for rotation about an engine central longitudinal axis A. The low speed spool 230 generally includes an inner shaft 231 that interconnects a fan 232 and a speed change mechanism 238, such as an epicyclic gearbox. The intermediate spool 260 generally includes an intermediate shaft 262 that interconnects a low pressure compressor 234 and an intermediate pressure turbine 264. The high speed spool 240 includes an outer shaft 242 that interconnects a high pressure compressor 244 and a high pressure turbine 246. A combustor 256 is arranged in the exemplary gas turbine engine 220 between the high pressure compressor 244 and the high pressure turbine 246. The inner shaft 231, the intermediate shaft 262, and the outer shaft 242 are concentric and rotate about the engine central longitudinal axis A which is collinear with their longitudinal axes.

In one example, the geared architecture 238 is located aft of a low pressure turbine 236. The low pressure turbine 236 in this example is a fixed stator turbine and drives the fan 232 directly through the geared architecture 238 in this example. The low pressure turbine 236 is attached to a sun gear of the geared architecture 238 through a turbine drive shaft 245. A ring gear connector 247 attaches a ring gear of the geared architecture 238 to the inner shaft 231. The inner shaft 231 extends through the sun gear of the geared architecture 238 to drive the fan 232.

The low pressure turbine 236 rotates the turbine drive shaft 245 at a first rotational speed to rotate the geared architecture 238. The geared architecture 238 reduces the first rotational speed from the turbine drive shaft 245 to a second rotational speed to rotate the inner drive shaft 231. The fan 232 rotates at the second rotational speed. The intermediate shaft 262 rotates at a third rotational speed different than the first or second rotational speed. The outer shaft 242 rotates at a fourth rotational speed different than the first, second, and third rotational speeds.

The preceding description is exemplary rather than limiting in nature. For example, in each of the foregoing embodiments, the ring gear of the speed change mechanism 38, 138, 238 (which would apply in the context of a star epicyclic gearbox) could be replaced with a carrier (which would apply in the context of a planetary epicyclic gearbox). The scope of legal protection given to this disclosure can only be determined by studying the following claims.

## Claims

1. A gas turbine engine (20; 120; 220) comprising:
a drive turbine (36; 136; 236) configured to drive a fan section (22; 122; 222);
a speed change mechanism (38; 138; 238) connected to the drive turbine (36; 136; 236) and located immediately aft of the drive turbine (36; 136; 236) and aft of the fan section (22; 122; 222), an output of the speed change mechanism (38; 138; 238) connected to the fan section (22; 122; 222), wherein the drive turbine (36; 136; 236) is a fixed stator turbine and the speed change mechanism (38; 138; 238) is an epicyclical gearbox,
**characterized in that**:
a turbine drive shaft (45; 145; 245) connects the drive turbine (36; 136; 236) to a sun gear of the epicyclical gearbox.

2. The gas turbine engine (20; 120; 220) of claim 1, comprising a gear reduction ratio of greater than about 2.3 at the drive turbine (36; 136; 236).

3. The gas turbine engine (20; 120; 220) of claim 1 or 2, including a connector (47; 147; 247) attaching an output of the epicyclic gearbox to an inner shaft (31; 131; 231), optionally wherein the output of the epicyclic gearbox is:
a ring gear; or
a planetary carrier.

4. The gas turbine engine (20; 120; 220) of claim 3, wherein the inner shaft (31; 131; 231) extends through the sun gear.

5. The gas turbine engine (20; 120; 220) of any preceding claim, wherein the speed change mechanism (38; 138; 238) is:
a planetary gear system; or
a star gear system.

6. The gas turbine engine (20; 120; 220) of any preceding claim, wherein the fan section (22; 122; 222) and a low pressure compressor (34; 134; 234) are attached to an or the inner shaft (31; 131; 231).

7. The gas turbine engine (20; 120; 220) of any preceding claim, including a first compressor (34; 134; 234) immediately aft of the fan section (22; 122; 222) and immediately upstream of a combustor section (26; 126; 226).

8. The gas turbine engine (220) of any preceding claim, including a high pressure turbine (246) and an intermediate turbine (264), optionally wherein the high pressure turbine (246) is axially upstream of the intermediate turbine (264).

9. The gas turbine engine (220) of claim 8, including a low pressure compressor (234) and a high pressure compressor (244), wherein the low pressure compressor (234) is connected with the intermediate turbine (264) and the high pressure compressor (244) connected with the high pressure turbine (246).

10. A method of operating a gas turbine engine (20; 120; 220) comprising:
rotating a fan drive turbine (36; 136; 236) at a first rotational speed;
reducing the first rotational speed to a second rotational speed using a speed change mechanism (38; 138; 238) positioned immediately axially downstream of the fan drive turbine (36; 136; 236); and
rotating a fan (32; 132; 232) positioned upstream of the fan drive turbine (36; 136; 236) and the speed change mechanism (38; 138; 238) at the second rotational speed, wherein the speed change mechanism (38; 138; 238) is an epicyclical gearbox and the fan drive turbine (136) is a fixed stator turbine, **characterized in that**:
a turbine drive shaft (45; 145; 245) connects the drive turbine (36; 136; 236) to a sun gear of the epicyclical gearbox.

11. The method of claim 10, the gas turbine engine (20; 120; 220) comprising a gear reduction ratio of greater than about 2.3 at the fan drive turbine (36; 136; 236).

12. The method of claim 10 or 11, including rotating a compressor (34; 134; 234) at the second rotational speed.

13. The method of claim 10 or 11, including rotating only the fan (32; 132; 332) at the second rotational speed.

14. The gas turbine engine (220) or method of any preceding claim, wherein the gas turbine engine (220) is a three spool gas turbine engine (220).

## Patentansprüche

1. Gasturbinenmotor (20; 120; 220), der Folgendes umfasst:
eine Antriebsturbine (36; 136; 236), die dazu ausgelegt ist, einen Lüfterabschnitt (22; 122; 222) anzutreiben;
einen Geschwindigkeitsänderungsmechanismus (38; 138; 238), der mit der Antriebsturbine (36; 136; 236) verbunden ist und sich direkt hinter der Antriebsturbine (36; 136; 236) und hinter dem Lüfterabschnitt (22; 122; 222) befindet, wobei ein Ausgang des Geschwindigkeitsänderungsmechanismus (38; 138; 238) mit dem Lüfterabschnitt (22; 122; 222) verbunden ist, wobei die Antriebsturbine (36; 136; 236) eine Turbine mit festem Stator ist und der Geschwindigkeitsänderungsmechanismus (38; 138; 238) ein Planetengetriebe ist,
**dadurch gekennzeichnet, dass**:
eine Turbinenantriebswelle (45; 145; 245) die Antriebsturbine (36; 136; 236) mit einem Sonnenrad des Planetengetriebes verbindet.

2. Gasturbinenmotor (20; 120; 220) nach Anspruch 1, der an der Antriebsturbine (36; 136; 236) ein Untersetzungsverhältnis von mehr als ungefähr 2,3 umfasst.

3. Gasturbinenmotor (20; 120; 220) nach Anspruch 1 oder 2, der einen Verbinder (47; 147; 247) beinhaltet, der einen Ausgang des Planetengetriebes an einer inneren Welle (31; 131; 231) befestigt, wahlweise wobei der Ausgang des Planetengetriebes Folgendes ist:
ein Hohlrad oder
ein Planetenträger.

4. Gasturbinenmotor (20; 120; 220) nach Anspruch 3, wobei sich die innere Welle (31; 131; 231) durch das Sonnenrad erstreckt.

5. Gasturbinenmotor (20; 120; 220) nach einem der vorhergehenden Ansprüche, wobei der Geschwindigkeitsänderungsmechanismus (38; 138; 238) Folgendes ist:
ein Planetenradsystem oder
ein Sternradsystem.

6. Gasturbinenmotor (20; 120; 220) nach einem der vorhergehenden Ansprüche, wobei der Lüfterabschnitt (22; 122; 222) und ein Niederdruckverdichter (34; 134; 234) an einem oder an der inneren Welle (31; 131; 231) befestigt sind.

7. Gasturbinenmotor (20; 120; 220) nach einem der vorhergehenden Ansprüche, der direkt hinter dem Lüfterabschnitt (22; 122; 222) und direkt stromaufwärts von einem Brennkammerabschnitt (26; 126; 226) einen ersten Verdichter (34; 134; 234) beinhaltet.

8. Gasturbinenmotor (220) nach einem der vorhergehenden Ansprüche, der eine Hochdruckturbine (246) und eine Zwischenturbine (264) beinhaltet, wahlweise wobei sich die Hochdruckturbine (246) axial stromaufwärts von der Zwischenturbine (264) befindet.

9. Gasturbinenmotor (220) nach Anspruch 8, der einen Niederdruckverdichter (234) und einen Hochdruckverdichter (244) beinhaltet, wobei der Niederdruckverdichter (234) mit der Zwischenturbine (264) verbunden ist und der Hochdruckverdichter (244) mit der Hochdruckturbine (246) verbunden ist.

10. Verfahren zum Betreiben eines Gasturbinenmotors (20; 120; 220), das Folgendes umfasst:
Drehen einer Lüfterantriebsturbine (36; 136; 236) mit einer ersten Drehgeschwindigkeit;
Reduzieren der ersten Drehgeschwindigkeit unter Verwendung eines Geschwindigkeitsänderungsmechanismus (38; 138; 238), der axial direkt stromabwärts von der Lüfterantriebsturbine (36; 136; 236) positioniert ist, auf eine zweite Drehgeschwindigkeit und
Drehen eines Lüfters (32; 132; 232), der stromaufwärts von der Lüfterantriebsturbine (36; 136; 236) und vom Geschwindigkeitsänderungsmechanismus (38; 138; 238) positioniert ist, mit der zweiten Drehgeschwindigkeit, wobei der Geschwindigkeitsänderungsmechanismus (38; 138; 238) ein Planetengetriebe ist und die Lüfterantriebsturbine (136) eine Turbine mit festem Stator ist, **dadurch gekennzeichnet, dass**:
eine Turbinenantriebswelle (45; 145; 245) die Antriebsturbine (36; 136; 236) mit einem Sonnenrad des Planetengetriebes verbindet.

11. Verfahren nach Anspruch 10, wobei der Gasturbinenmotor (20; 120; 220) an der Lüfterantriebsturbine (36; 136; 236) ein Untersetzungsverhältnis von mehr als ungefähr 2,3 umfasst.

12. Verfahren nach Anspruch 10 oder 11, das das Drehen eines Verdichters (34; 134; 234) mit der zweiten Drehgeschwindigkeit beinhaltet.

13. Verfahren nach Anspruch 10 oder 11, das das Drehen nur des Lüfters (32; 132; 332) mit der zweiten Drehgeschwindigkeit beinhaltet.

14. Gasturbinenmotor (220) oder Verfahren nach einem der vorhergehenden Ansprüche, wobei der Gasturbinenmotor (220) ein Gasturbinenmotor (220) mit drei Schiebern ist.

## Revendications

1. Moteur à turbine à gaz (20 ; 120 ; 220) comprenant :
une turbine d'entraînement (36 ; 136 ; 236) configurée pour entraîner une section de soufflante (22 ; 122 ; 222) ;
un mécanisme de changement de vitesse (38 ; 138 ; 238) relié à la turbine d'entraînement (36 ; 136 ; 236) et situé immédiatement à l'arrière de la turbine d'entraînement (36 ; 136 ; 236) et à l'arrière de la section de soufflante (22 ; 122 ; 222), une sortie du mécanisme de changement de vitesse (38 ; 138 ; 238) étant reliée à la section de soufflante (22 ; 122 ; 222), dans lequel la turbine d'entraînement (36 ; 136 ; 236) est une turbine à stator fixe et le mécanisme de changement de vitesse (38 ; 138 ; 238) est une boîte de vitesses épicycloïdale,
**caractérisé en ce que** :
un arbre d'entraînement de turbine (45 ; 145 ; 245) relie la turbine d'entraînement (36 ; 136 ; 236) à un planétaire de la boîte de vitesses épicycloïdale.

2. Moteur à turbine à gaz (20 ; 120 ; 220) selon la revendication 1, comprenant un rapport de réduction supérieur à environ 2,3 au niveau de la turbine d'entraînement (36 ; 136 ; 236) .

3. Moteur à turbine à gaz (20 ; 120 ; 220) selon la revendication 1 ou 2, comportant un connecteur (47 ; 147 ; 247) fixant une sortie de la boîte de vitesses épicycloïdale à un arbre interne (31 ; 131 ; 231), éventuellement dans lequel la sortie de la boîte de vitesses épicycloïdale est :
une couronne dentée ; ou
un porte-satellites.

4. Moteur à turbine à gaz (20 ; 120 ; 220) selon la revendication 3, dans lequel l'arbre interne (31 ; 131 ; 231) s'étend par l'intermédiaire du planétaire.

5. Moteur à turbine à gaz (20 ; 120 ; 220) selon une quelconque revendication précédente, dans lequel le mécanisme de changement de vitesse (38 ; 138 ; 238) est :
un système d'engrenage planétaire ; ou
un système d'engrenage en étoile.

6. Moteur à turbine à gaz (20 ; 120 ; 220) selon une quelconque revendication précédente, dans lequel la section de soufflante (22 ; 122 ; 222) et un compresseur basse pression (34 ; 134 ; 234) sont fixés à un ou l'arbre interne (31 ; 131 ; 231).

7. Moteur à turbine à gaz (20 ; 120 ; 220) selon une quelconque revendication précédente, comportant un premier compresseur (34 ; 134 ; 234) immédiatement à l'arrière de la section de soufflante (22 ; 122 ; 222) et immédiatement en amont d'une section de chambre de combustion (26 ; 126 ; 226).

8. Moteur à turbine à gaz (220) selon une quelconque revendication précédente, comportant une turbine haute pression (246) et une turbine intermédiaire (264), éventuellement dans lequel la turbine haute pression (246) est axialement en amont de la turbine intermédiaire (264).

9. Moteur à turbine à gaz (220) selon la revendication 8, comportant un compresseur basse pression (234) et un compresseur haute pression (244), dans lequel le compresseur basse pression (234) est relié à la turbine intermédiaire (264) et le compresseur haute pression (244) est relié à la turbine haute pression (246).

10. Procédé de fonctionnement d'un moteur à turbine à gaz (20 ; 120 ; 220) comprenant :
la rotation d'une turbine d'entraînement de soufflante (36 ; 136 ; 236) à une première vitesse de rotation ;
la réduction de la première vitesse de rotation à une seconde vitesse de rotation en utilisant un mécanisme de changement de vitesse (38 ; 138 ; 238) positionné immédiatement axialement en aval de la turbine d'entraînement de soufflante (36 ; 136 ; 236) ; et
la rotation d'une soufflante (32 ; 132 ; 232) positionnée en amont de la turbine d'entraînement de soufflante (36 ; 136 ; 236) et du mécanisme de changement de vitesse (38 ; 138 ; 238) à la seconde vitesse de rotation, dans lequel le mécanisme de changement de vitesse (38 ; 138 ; 238) est une boîte de vitesses épicycloïdale et la turbine d'entraînement de soufflante (136) est une turbine à stator fixe, **caractérisé en ce que** :
un arbre d'entraînement de turbine (45 ; 145 ; 245) relie la turbine d'entraînement (36 ; 136 ; 236) à un planétaire de la boîte de vitesses épicycloïdale.

11. Procédé selon la revendication 10, le moteur à turbine à gaz (20 ; 120 ; 220) comprenant un rapport de réduction supérieur à environ 2,3 au niveau de la turbine d'entraînement de soufflante (36 ; 136 ; 236).

12. Procédé selon la revendication 10 ou 11, comportant la rotation d'un compresseur (34 ; 134 ; 234) à la seconde vitesse de rotation.

13. Procédé selon la revendication 10 ou 11, comportant la rotation uniquement de la soufflante (32 ; 132 ; 332) à la seconde vitesse de rotation.

14. Moteur à turbine à gaz (220) ou procédé selon une quelconque revendication précédente, dans lequel le moteur à turbine à gaz (220) est un moteur à turbine à gaz (220) à trois bobines.
